# EUROPEAN PATENT APPLICATION

(11) **EP 0 875 818 A2**
(43) Date of publication of application: **04.11.1998**
(21) Application number: 98303359.8
(22) Date of filing: 29.04.1998
(51) Int. Cl.: G06F 1/16

(54) **Portable computer with exposed speakers and associated sound control buttons**

(30) Priority: 30.04.1997 US 846572
(71) Applicant: Compaq Computer Corporation, Houston Texas 77070 (US)
(72) Inventor: Loudenslager, John H., Phoenix, Arizona 85020 (US)
(74) Representative: Brunner, Michael John

(57) **Abstract**

A portable computer has a base housing with a CD ROM drive disposed therein and having an audio portion with a pair of associated speakers, and a display screen lid housing. The lid housing has a front edge and is secured to a rear portion of the base housing for pivotal movement relative thereto between a closed position in which the lid housing extends along the top side of the base housing and covers a keyboard structure thereon, and an open position in which the lid housing is pivoted upwardly away from the base housing to expose the display screen and keyboard for use. When the lid housing is closed, its front edge is spaced rearwardly from the front side of the base housing, thereby leaving a front portion of the base housing top side wall exposed. The speakers underlie this top side wall section and a pair of speaker grilles formed therein, and sound control buttons are mounted on the sop side wall section and are operatively connected to the audio portion of the CD ROM drive. Accordingly, even with the lid housing closed, the speakers and the control buttons remain unblocked by the lid housing, thereby permitting a user to operate the audio portion of the CD ROM drive with the lid housing in either of its open and closed positions.

## Description

The present invention generally relates to computer apparatus and, in a preferred embodiment thereof, more particularly relates to portable computers, such as notebook and laptop computers, and the control of sound systems incorporated therein.

With increasing frequency, CD ROM ("compact disc read-only memory") drives are being operatively incorporated in small light weight portable computers such as notebook and laptop computers. In addition to permitting the computer user to take advantage of the large transferable data storage capacity of a compact disc with a computer program thereon compared to the considerably lesser transferable data storage capacity of a floppy disc, the CD ROM drive also typically permits the user to insert therein an audio disc (such as a compact disc which the user plays on his home or car stereo system) and listen to music while he computes.

As conventionally constructed, the typical portable computer of this general type has a base housing on the top side of which a keyboard structure is operatively disposed. A display screen lid housing is secured to a rear portion of the base housing for pivotal movement relative thereto between a closed storage and transport orientation in which the lid housing extends along and completely covers the keyboard and top base housing side, and an open use orientation in which the lid housing is pivoted upwardly away from the top base housing side to operatively expose the keyboard and display screen.

The CD ROM drive is disposed within the interior of the base housing and is typically provided with a disc insertion slot within a vertical side wall portion of the computer base housing. The audio portion of the drive typically has a pair of speakers associated therewith, such speakers also being disposed within the base housing and positioned to underlie speaker grilles supported in corresponding openings in external wall sections of the base housing.

While as mentioned, the incorporation of a CD ROM drive into a portable computer typically affords a user of the computer the ability to enjoy audio compact disc music while he is using the computer in more traditional manners, for several reasons the computer lid must be opened to effectively use the CD ROM drive to play audio compact disc music. In conventionally constructed portable computers such music cannot be effectively played with the computer in its more compact lid-closed storage and transport orientations.

Accordingly, in order for a user to listen to compact disc music emanating from his computer while carrying it about he must first open the computer and then maintain it in a somewhat unwieldy opened transport orientation while carrying it around. There are three primary reasons for this undesirable inability to effectively play compact disc music on a conventionally constructed portable computer without opening the computer's lid.

First, in conventionally constructed portable computers the controls used to operate the CD ROM drive (such as the keyboard and pointing device) are typically positioned on the base housing so as to be covered, and thus rendered inaccessible, by the lid housing in its closed position. Accordingly, the lid must be opened to initially access these controls.

Second these controls are typically linked to the CD ROM drive through a suitable screen-displayed software program. Accordingly, to activate the CD ROM in its music playing capacity it is necessary to see the display screen - a task which cannot be effected without opening the computer's display screen lid.

Third, in conventionally constructed portable computers the speaker grilles associated with the audio portion of the CD ROM drive are positioned on the base housing so as to be covered by the lid housing in its closed position. Thus, if the lid is closed after opening it to start the compact disc music by using the pointing device in conjunction with the CD ROM drive operating indicia on the display screen, the speakers will be blocked and the music will be at least undesirably muffled if not rendered entirely inaudible to the computer user.

In carrying out principles of the present invention, in accordance with a preferred embodiment thereof, a portable computer is provided which comprises a housing structure having a lid portion selectively movable between open and closed positions. Sound generating apparatus is carried by the housing structure and includes a speaker opening portion extending through an exterior wall section of the housing structure, and an external, user operable sound control member. The speaker opening portion and the sound control member are positioned so as to exposed for use with the lid portion of the computer in each of its open and closed positions.

Preferably, the housing portion of the portable computer has (1) a base section with a top side on which a keyboard is disposed, and opposite front and rear sides, and (2) a display screen lid section secured to the base section for pivotal movement relative thereto between a closed position in which the lid section extends across the top side of the base section and covers the keyboard, and an open position in which the lid section is moved away from the top side and exposes the keyboard structure for use.

According to an aspect of the present invention, the sound generating apparatus is representatively a CD ROM drive disposed within the base housing section and having an audio portion including an associated speaker, and the base section and lid section are relatively configured such that when the lid section is closed it leaves a front top side portion of the base housing section exposed. The sound control member is operatively and directly connected to the audio section of the CD ROM drive and, together with the speaker opening, is positioned on the front top side portion of the base section which remains uncovered by the lid housing in its closed position. The speaker underlies the speaker opening so as not to be blocked by the closed lid housing.

Because of this unique portable computer configuration, a user can effectively control the audio section of the CD ROM drive, and play music from an audio compact disc inserted therein, without opening the computer lid. Additionally, with the computer lid opened, the user can select and play compact disc music without the necessity of first bringing onto the display screen a media player software program. Accordingly, normal computing tasks can be carried out while the user selects and plays compact disc music without halting the on-screen computer program or programs.

One example of a portable computer according to the invention will now be described with reference to the accompanying drawings, in which:
FIG. 1 is a perspective view of an improved portable computer embodying principles of the present invention and being illustrated in its open use orientation;
FIG. 2 is a perspective view of the portable computer in its closed storage and transport orientation; and
FIG. 3 is an enlarged scale left side elevational view of the closed portable computer.

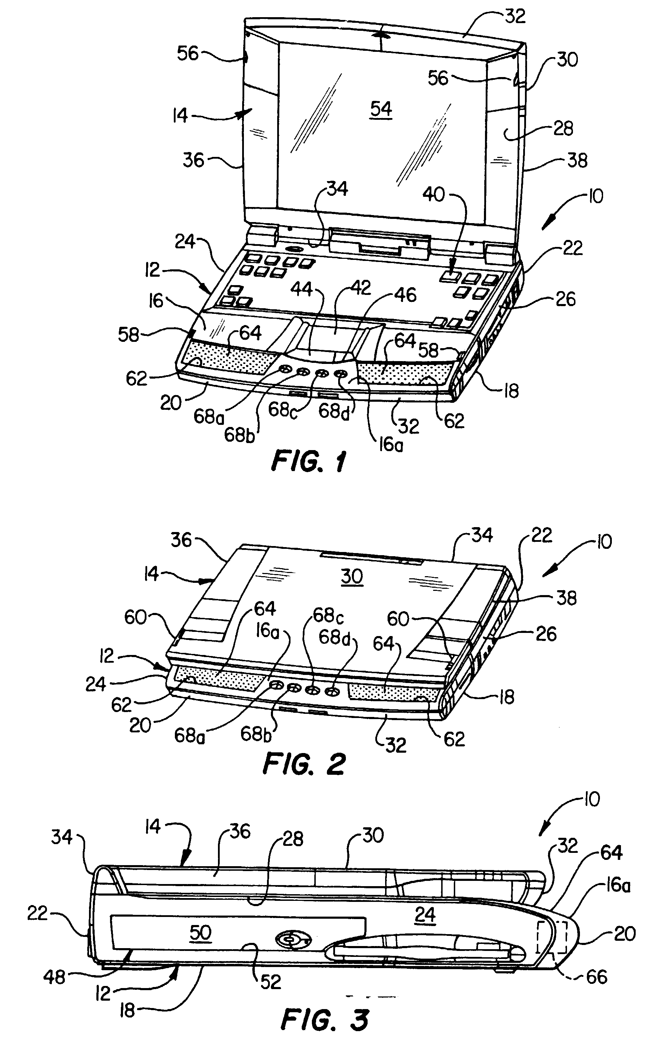

Illustrated in FIGS. 1-3 is a specially designed portable computer 10 that embodies principles of the present invention and includes a generally rectangular base housing 12 and a substantially thinner, generally rectangular lid housing 14. Base housing 12 has top and bottom side walls 16 and 18, front and rear side walls 20 and 22, and opposite left and right side walls 24 and 26. Lid housing 14 has opposite inner and outer side walls 28 and 30, front and rear edge walls 32 and 34, and opposite left and right edge walls 36 and 38.

Base housing 12 has a keyboard 40 mounted on a rear portion of its top wall 16 and a pointing structure, representatively a touchpad 42 and associated select buttons 44 and 46, centrally mounted on the base housing top side wall 16 at the front side of the keyboard 40. A CD ROM drive 48 is mounted within the base housing 12 and has a loading tray portion 50 operatively supported for selective movement into and out of an opening 52 formed in the left base housing side wall 24 carry a compact disc (not shown) into and out of the CD ROM drive portion within the base housing 12.

The lid housing 14 has a display screen 54 carried on its inner side 28 and is secured at its rear edge 34 to a rear top side portion of the base housing 12 for pivotal movement relative thereto between (1) an open use orientation (FIG. 1) in which the lid housing is pivoted upwardly away from the base housing top side wall 16 to expose the keyboard 40 and the display screen 54 for use, and (2) a closed storage and transport orientation (FIGS. 2 and 3) in which the lid housing overlies the base housing top side wall 16, covers the keyboard 40 and conceals the display screen 54.

A pair of spring-loaded latch members 56 (see FIG. 1) carried on the inner side of the lid housing 14 are receivable in corresponding top side openings 58 in the base housing 12 to releasably lock the lid housing 14 in its closed orientation. The closed lid housing 14 may be unlocked from the base housing 12, and pivoted back up to its FIG. 1 open use orientation using slidable unlatching members 60 (see FIG. 2) carried on the outer side 30 of the lid housing 14 and operative to unhook the latch members 56 from the base housing 12.

According to a unique configurational aspect of the portable computer 10, when its lid housing 14 is closed as illustrated in FIGS. 2 and 3, the lid housing front edge wall 32 is rearwardly offset from the base housing front side wall 20 in a manner leaving a portion 16a of the base housing top side wall 16 (positioned forwardly of the touch pad and select buttons 42,44,46) exposed. As illustrated, the wall portion 16a has a generally rectangular configuration which is elongated in a left-to-right direction as viewed in FIG. 2.

Formed in opposite end sections of this top side wall strip 16a are a spaced pair of speaker openings 62 that receive perforated speaker grilles 64. Each speaker grille 64 overlies a speaker 66 (one of which is shown in phantom in FIG. 3) disposed in a front interior portion of the base housing 12 and operatively connected to the audio portion of the CD ROM drive 48. Externally mounted on the base housing top side wall strip 16a are four sound control buttons 68a,68b,68c and 66d.

Buttons 68a,68b,68c and 68c are wired directly to the audio section of the CD ROM drive 48 in a manner enabling the buttons to be used to play music from an audio compact disc inserted into the drive 48 without utilizing a screen-displayed software program to control the drive in a musicplaying mode. Representatively, button 68a is an "on" button; button 68b is an "off" button; button 68c is a "reverse track" button; and button 68d is a "forward track" button.

As can be seen in FIGS. 2 and 3, when the lid housing 14 is closed, the sound control buttons 68a-68d and all but small rear edge portions of the speaker grilles 64 remain exposed due to the rearward offset of the front lid housing edge wall 32 from the front base housing side wall 20. Stated in another manner, these sound portions of the portable computer 10 are not blocked by its closed lid housing 14. Additionally, as can be seen in FIG. 3, each speaker 66 underlies the unblocked portion of its overlying speaker grille 64.

Accordingly, even with the lid housing 14 closed the user can effectively control the audio section of the CD ROM drive 48 and play the music from an audio compact disc operatively inserted therein, and the resulting music will not be muffled or otherwise distorted by lid-blocked speaker grilles. Additionally, the user can conveniently play compact disc music while he uses the computer 10 for computing tasks, with its lid housing 14 opened, without the necessity of pulling media player software onto the display screen or otherwise disrupting on-screen computing programs, simply by using the sound control buttons 68a-68d that provide a direct link to the audio section of the CD ROM drive 48.

As will be appreciated, the illustrated number and type of user operable control members 68a-68d are merely representative, and such control members could alternatively be positioned on the computer in other locations which remain exposed when the lid housing 14 is moved to its closed storage and transport orientation. Additionally, the speakers 66 and their associated grilles 64 could alternatively be positioned at other exterior locations on the portable computer 10 that remain exposed when the lid housing 14 is closed.

The foregoing detailed description is to be clearly understood as being given by way of illustration and example only, the spirit and scope of the present invention being limited solely by the appended claims.

## Claims

1. A portable computer comprising:
a housing structure having a lid portion selectively movable between open and closed positions; and
sound generating apparatus carried by said housing structure and including (1) a speaker opening portion extending through an exterior wall section of said housing structure, and (2) an external, user operable sound control member,
said speaker opening portion and said sound control member being positioned so as to be exposed for use with said lid portion in each of its open and closed positions.

2. The portable computer of claim 1, wherein:
said sound generating apparatus is a CD ROM drive having an audio section to which said sound control member is operatively coupled, and
said portable computer includes a speaker associated with said audio section and carried within said housing structure in an overlapping relationship with said speaker opening portion.

3. The portable computer of claim 1, wherein said housing structure includes a base portion to which said lid housing is pivotally secured, said base portion having a top side along which said lid portion extends when in said closed position thereof, and said speaker opening portion and said sound control member are positioned on said top side.

4. The portable computer of claim 3, wherein said base portion has a front side, and said speaker opening portion and said sound control member are positioned on a front section of said top side.

5. The portable computer of claim 1, wherein said housing structure includes a base portion to which said lid housing is pivotally secured, said base portion and said lid portion being relatively configured in a manner such that when said lid portion is in said closed position it leaves a section of said top side of said base portion uncovered thereby and thus exposed; and
a user operable control member exteriorly disposed on said base portion.

6. The portable computer of claim 5, wherein said user operable control member is externally disposed on said section of said top side of said base portion.

7. The portable computer of claim 1, wherein said sound control member is a CD ROM drive sound control member, and said sound speaker is a CD ROM sound speaker.

8. The portable computer of claim 5, wherein said section of said top side of said base portion is a front section thereof.

9. The portable computer of claim 1, having a sound speaker positioned within said base portion and overlapping the opening in said exterior wall portion.

10. A method of constructing a portable computer of the type having a housing structure with a lid portion selectively movable between open and closed positions, said method comprising the steps of:
forming a speaker opening in an exterior wall section of the housing structure;
externally mounting a user operable sound control member on the housing structure; and
positioning said speaker opening and said sound control member in a manner such that said sound control member and at least a portion of said speaker opening remain exposed for use with the housing structure lid portion in each of its open and closed positions.
